# EUROPÄISCHE PATENTANMELDUNG

(11) **EP 3 912 841 A1**
(43) Veröffentlichungstag der Anmeldung: **24.11.2021**
(21) Anmeldenummer: 21174549.2
(22) Anmeldetag: 18.05.2021
(51) Int. Cl.: B60J 7/16, E05D 15/40

(54) **DACHLÜFTER FÜR FREIZEITFAHRZEUG**

(30) Priorität: 18.05.2020 DE 102020113452
(71) Anmelder: Hymer GmbH & Co. KG, 88339 Bad Waldsee (DE)
(72) Erfinder: Jablonski, André, 88436 Eberhardzell (DE); Venter, Frank, 88212 Ravensburg (DE)
(74) Vertreter: Waller, Stefan

(57) **Zusammenfassung**

Bei einem Dachlüfter für ein Freizeitfahrzeug bei der in einer Montageeinheit ein Montagerahmen (3) zum Einsetzen in einen Dachausschnitt vorgesehen ist und eine Abdeckhaube (2), die von einer geschlossenen Position auf dem Montagerahmen (3)in eine geöffnete Position angehoben werden kann durch zwei Scherenhebel (8,11), die den Montagerahmen (3) und die Abdeckhaube (2) verbinden, wobei die Scherenhebel (8,11) in einem Drehpunkt (17) verbunden sind und ein Endpunkt der Scherenhebel (11) in der Abdeckhaube an einem festen Punkt (12) drehbar angelenkt ist sowie ein Endpunkt der Scherenhebel (8) in dem Montagerahmen (3) an einem festen Punkt (9) drehbar angelegt ist, die jeweils verbleibenden Endpunkte in Längsführungen (12,14) verschiebbar in der Abdeckhaube (2) und dem Montagerahmen (3) geführt sind und durch einen Betätigungsmechanismus (23) der in der Längsführung (14) des Montagerahmens (3) geführte Scherenhebel (11) zum Anheben der Abdeckhaube verschoben werden kann, ist die Länge eines Scherenhebelabschnitts (18,19) beider Scherenhebel (8,11) auf der gleichen Seite von dem Drehpunkt (17) kürzer als die Länge der Scherenhebelabschnitte auf der anderen Seite des Drehpunkts (17), sodass bei einem Anheben der Abdeckhaube (2) diese zugleich um einen Winkel gekippt wird.

## Beschreibung

Die Erfindung betrifft einen Dachlüfter für ein Freizeitfahrzeug, insbesondere für ein Wohnmobil oder einen Caravan, nach dem Oberbegriff des Patentanspruchs 1.

Bei der aktuell verwendeten Technologie für Dachlüfter von Freizeitfahrzeugen kommt ein mechanischer und nicht in die Montageeinheit integrierter Aufstellmechanismus zum Einsatz. Solche Dachlüfter kommen ganz allgemein bei Freizeitfahrzeugen zum Einsatz. Unter dem Begriff Freizeitfahrzeuge werden als Oberbegriff sowohl Wohnanhänger bzw. Caravans, als auch motorgetrieben Wohnmobile zusammengefasst. Daneben fallen unter den Begriff Freizeitfahrzeuge auch Wohnmobile, die in übliche Kastenwagen bzw. Kleintransporter ohne einen Sonderkarosserieaufbau integriert werden und insbesondere auch Fahrzeuge, die neben einer Nutzung beim Camping mit einer flexibel bzw. zumindest teilweise entnehmbaren Inneneinrichtung versehen sind und auch anderweitig genutzt werden können.

Im Stand der Technik verwendete Aufstellmechanismen stellen eine Abdeckhaube eines solchen Dachlüfters lediglich in vertikaler Richtung auf, heben diese also nur an.

Wünschenswert wäre jedoch neben dem Heben der Abdeckhaube ein gleichzeitiges Kippen. Weiterhin wäre es wünschenswert, wenn das Heben und gleichzeitige Kippen bzw. Öffnen und Schließen elektrisch erfolgen könnte.

Aus der CH 525 786 A ist eine mechanisch verstellbare Wohnwagendachluke bekannt mit zueinander symmetrischen Hebelscheren wobei ein erster Hebel der Hebelschere an einem Fixpunkt eines Montagerahmens drehbar befestigt ist und sein anderes Ende in einem Längsschlitz einer Haube der Wohnwagendachluke geführt ist. Über einen zweiten Hebel, der drehbar an einem Fixpunkt der Haube befestigt ist und in dem Montagerahmen in einer linearen Führung durch eine Zahnstange zum Anheben der Haube verschoben werden kann, ist es möglich, die Haube anzuheben. Nachteilig an diesem Stand der Technik ist, dass die sich ergebende Lüftungsöffnung durch das parallele Anheben in ihrem Querschnitt begrenzt ist.

Der vorliegenden Erfindung liegt die Aufgabe zugrunde, einen Dachlüfter für ein Freizeitfahrzeug zur Verfügung zu stellen, der den zuvor geschilderten Stand der Technik verbessert, wobei insbesondere auch eine zuverlässige und sichere elektrische Betätigung möglich sein soll.

Diese Aufgabe wird durch einen Dachlüfter mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Dachlüfter für ein Freizeitfahrzeug bei der in einer Montageeinheit ein Montagerahmen zum Einsetzen in einen Dachausschnitt vorgesehen ist und eine Abdeckhaube, die von einer geschlossenen Position auf dem Montagerahmen in eine geöffnete Position angehoben werden kann durch zwei Scherenhebel, die den Montagerahmen und die Abdeckhaube verbinden, wobei die Scherenhebel in einem Drehpunkt verbunden sind und ein Endpunkt der Scherenhebel in der Abdeckhaube an einem festen Punkt drehbar angelenkt ist sowie ein Endpunkt der Scherenhebel in dem Montagerahmen an einem festen Punkt drehbar angelegt ist, die jeweils verbleibenden Endpunkte in Längsführungen verschiebbar in der Abdeckhaube und dem Montagerahmen geführt sind und durch einen Betätigungsmechanismus der in der Längsführung des Montagerahmen geführte Scherenhebel zum Anheben der Abdeckhaube verschoben werden kann, die Länge eines Scherenhebelabschnitt beider Scherenhebel auf der gleichen Seite von dem Drehpunkt kürzer ist als die Länge der Scherenhebelabschnitte auf der anderen Seite des Drehpunkts, sodass bei einem Anheben der Abdeckhaube diese zugleich um einen Winkel gekippt wird.

Als vorteilhafte und wesentliche Neuerung der Erfindung ergibt sich eine Hebe-Kipp Funktion in der Aufstellkinematik der Abdeckhaube des Dachlüfters beim Öffnen, durch die die Abdeckhaube des Dachlüfters in der oberen Endstellung im geöffneten Zustand in eine gekippte Stellung verbracht wird. Des Weiteren ist die Kinematik nun komplett im Bauteil verstaut. D. h. es gibt eine Baueinheit, die als Ganzes montiert werden kann, und in der neben der eigentlichen Abdeckhaube auch die Hebelmechanik sowie ein optionaler elektrische Antrieb integriert ist. Dadurch müssen nicht mehrere Elemente montiert werden, sondern auf den geöffneten Dachausschnitt kann ein einziges Bauteil montiert werden. Durch das zusätzliche Kippen der Abdeckhaube des Dachlüfters und den daraus resultierenden Winkel wird eine deutlich vergrößerte Öffnung möglich, die wiederum das Lüftungsverhalten signifikant verbessert und damit die Behaglichkeit im Fahrzeug.

Vorteilhaft können die beiden Endpunkte eines oder beider Scherenhebel mit dem Drehpunkt jeweils einen stumpfen Winkel kleiner als 180° bilden, insbesondere der Drehpunkt in der geschlossenen Stellung der Abdeckhaube auf dem Montagerahmen nach oben versetzt sein.

Beispielsweise kann die Anordnung so sein, dass im geschlossenen Zustand der Drehpunkt möglichst weit oben an der Abdeckhaube sich befindet und die Lagerungspunkte der Scherenhebel an der Abdeckhaube mit diesem Drehpunkt nahezu oder in einer geraden Linie liegen. Dadurch haben die unteren Scherenhebelabschnitt mit ihren Lagerungspunkten an dem Montagerahmen zu dem Drehpunkt einen günstigeren Winkel, wenn die Betätigungsvorrichtung durch Verschieben in der Längsführung die Abdeckhaube anheben soll oder diese mit einer gewissen Kraft nach unten in die verschlossene Stellung ziehen soll. Durch den Winkel der beiden unteren Lagerungspunkte mit dem Drehpunkt kann durch eine lineare Verschiebung eine größere senkrechte Kraft erreicht werden.

In einer vorteilhaften Ausgestaltung sind jeweils an einer Seite des Montagerahmens zwei Scherenhebel angeordnet und die kurzen Enden der Scherenhebel zeigen in Fahrtrichtung, sodass die Abdeckhaube in Fahrtrichtung nach unten kippt beim Anheben.

Durch die Scherenhebel ist es nicht nur möglich, die Abdeckhaube anzuheben, sondern auch zusätzlich zu verkippen. Bevorzugt erfolgt dieses Verkippen so, dass in der oberen angehobenen Position die tiefere Seite in Richtung der Fahrtrichtung zeigt. Dabei kann die Bewegung so sein, dass zwangsgeführt während des Anhebens ein zunehmendes Kippen erfolgt. Dies erhöht auch die Sicherheit, wenn versehentlich mit geöffneter Abdeckhaube gefahren, insbesondere sehr schnell gefahren wird. Die Abdeckhaube wird zugedrückt und nicht in Richtung einer weiteren Öffnung belastet durch den Fahrtwind.

Bevorzugt ist jeder Scherenhebel an einem Ende verschiebbar und am anderen Ende in einem festen Punkt drehbar gelagert.

Es ist auch denkbar, dass ein Scherenhebel sowohl in der Abdeckhaube, wie auch dem Montagerahmen längsverschiebbar gelagert ist.

In einer bevorzugten Ausführungsform ist jeder Scherenhebel am Ende seines kurzen Scherenhebelabschnitts drehbar in einem festen Punkt gelagert.

Der Betätigungsmechanismus kann aus einer drehbaren Gewindestange und einem mit dem Ende des Scherenhebels drehbar verbundenen Innengewindeabschnitt bestehen.

Dieser Innengewindeabschnitt im Sinne einer Mutter kann beispielsweise ein durch die Gewindestange und eine Fläche des Montagerahmens oder sonstige Führungselemente wie auch allein durch die Gewindestange selbst geführtes Mutternelement sein, an dem der Scherenhebel drehbar angelenkt ist. Durch eine Drehung der Gewindestange wird dann das Mutternelement linear verschoben.

In einer besonders bevorzugten Ausgestaltung des Dachlüfters kann der Betätigungsmechanismus elektrisch angetrieben werden, insbesondere eine Gewindestange wie zuvor beschrieben durch einen Elektromotor antreiben.

Dadurch kann die Öffnungsbewegung elektrisch angetrieben werden und die Dachlüfter bequem durch einen elektrischen Schalter betätigt werden.

Vorteilhaft weist die Abdeckhaube einen über eine Lüftungsöffnung des Montagerahmens überstehenden und den Montagerahmen zumindest teilweise überdeckenden Rand, insbesondere nach unten abknickenden Rand, auf und ein Elektroantrieb ist des Betätigungsmechanismus unterhalb dieses Randes auf dem Montagerahmen angeordnet.

Im geschlossenen Zustand deckt die Abdeckhaube damit auch den Montagerahmen und Funktionselemente der Dachlüfter ab und schützt diese somit vor Witterungseinwirkungen. Die Abdeckhaube selbst kann dabei aus einem einzigen Stück eines durchsichtigen Materials, beispielsweise eines Kunststoffs oder Plexiglas stehen. Dadurch wird ein einfacher Aufbau ermöglicht mit wenigen Teilen, der kostengünstig herzustellen ist.

Der Elektroantrieb kann an einer Querseite des Montagerahmens angeordnet sein und an beiden Längsseiten an der Ecke des Montagerahmen einen Antrieb für die jeweilige Gewindestange aufweisen.

Die Teile des Elektroantriebs können somit unter dem abdeckenden Rand der Abdeckhaube angeordnet sein und durch diese zusätzlich im geschlossenen Zustand bzw. nur wenig geöffneten Zustand vor Witterungseinflüssen geschützt werden.

In dem Montagerahmen unterhalb der Abdeckhaube können Lamellen zur Beschattung angeordnet und drehbar gelagert sein, insbesondere in einer Längsrichtung des Dachlüfters.

Diese optionale Lamellenkassette im Innenraum lässt vielfältig einstellbare Lichtverhältnisse zu. Durch Verdrehung der Lamellen kann eine Regulierung des Tageslichteinfalls erfolgen. Dies kann durch einen Betätigungsmechanismus oder auch von Hand erfolgen, wobei beispielsweise die Lamellendrehpunkt alle gekoppelt sein können, sodass sich durch Verdrehen mit Hand von einer Lamelle alle Lamellen verdrehen.

Weitere Vorteile und Einzelheiten der Erfindung werden anhand der in den schematischen Figuren dargestellten Ausführungsbeispiele näher erläutert. Hierbei zeigt
- Fig. 1: einen Dachlüfter nach dem Stand der Technik in Perspektivansicht von oben,
- Fig. 2: den Dachlüfter der Fig. 1 in Perspektivansicht von unten,
- Fig. 3: einen erfindungsgemäßen Dachlüfter in Perspektivansicht halb geöffnet,
- Fig. 4: den Dachlüfter der Fig. 3 in einer Sprengbildansicht,
- Fig. 5: eine Ansicht von unten auf Lamellen eines Dachlüfters und
- Fig. 6: ein weiteres Ausführungsbeispiel eines Dachlüfters in einer perspektivischen Seitenansicht.

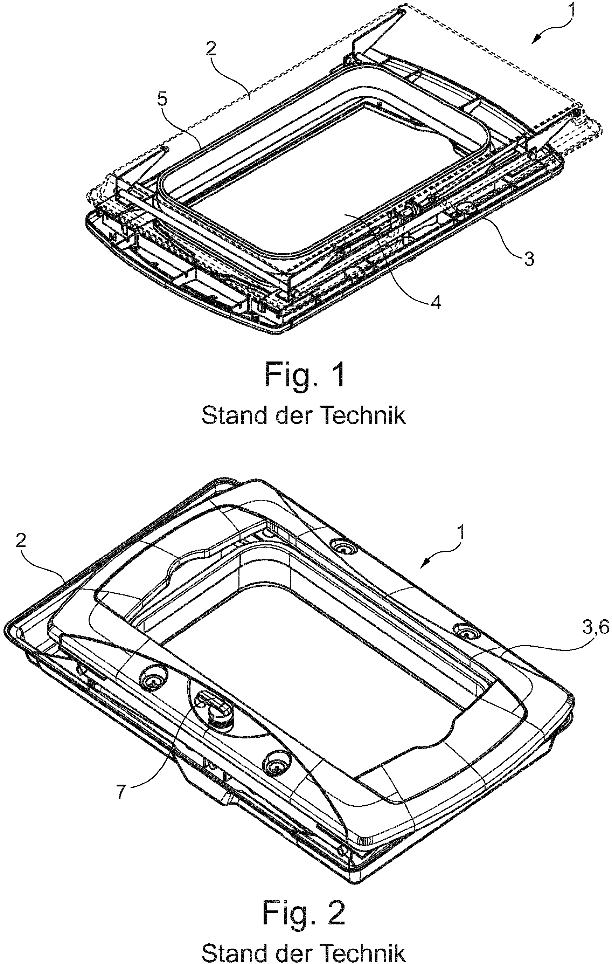

Die Fig. 1 zeigt einen Dachlüfter 1 nach dem Stand der Technik in Perspektivansicht von oben. Unter einer Abdeckhaube 2 aus einem durchsichtigen Material wie beispielsweise Plexiglas, der in einem Stück gefertigt ist, befindet sich der Montagerahmen 3 und die eigentliche Lüftungsöffnung 4, an deren Oberkante eine Dichtung 5 aufsitzt, die bei abgesenkter Abdeckhaube 2 an dieser anliegt.

Die Fig. 2 zeigt den Dachlüfter 1 der Fig. 1 in Perspektivansicht von unten. Der Montagerahmen 3 weist an seiner Unterseite eine Abdeckung 6 auf die zum Innenraum hin angeordnet ist. Über eine Handkurbel 7 und einen hier nicht näher dargestellten Betätigungsmechanismus kann die Abdeckhaube 2 angehoben werden.

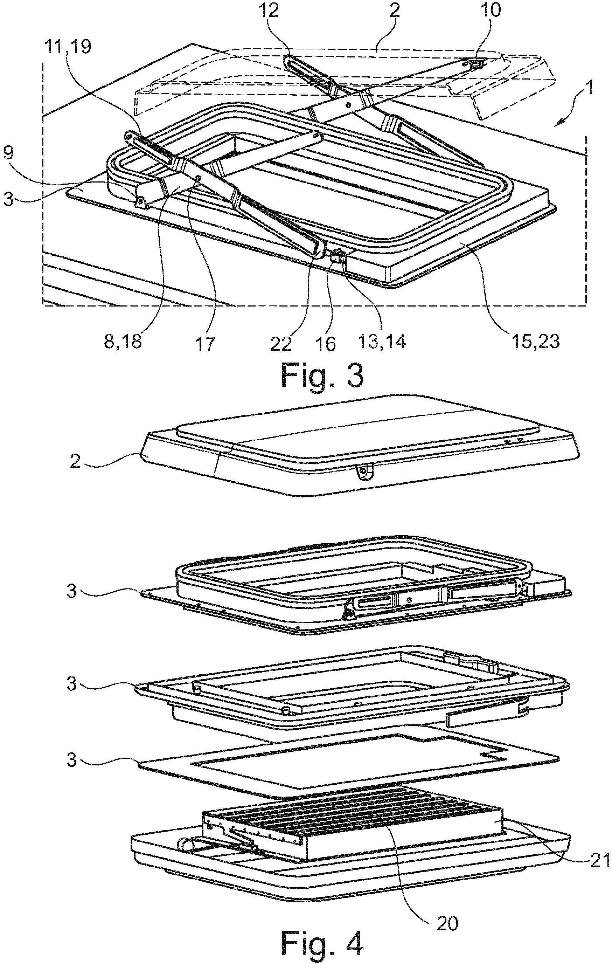

Die Fig. 3 zeigt einen erfindungsgemäßen Dachlüfter 1 in Perspektivansicht geöffnet. Bauteile, die den bisher beschriebenen entsprechen, sind mit denselben Bezugszeichen bezeichnet wie auch in den nachfolgenden Figuren. Die Abdeckhaube 2 ist oberhalb des Montagerahmens 3 in geöffneter Stellung dargestellt, wobei sie nicht nur angehoben, sondern zusätzlich auch gekippt ist.

Ein erster Scherenhebel 8 ist in einem ersten festen Punkt 9 drehbar an dem Montagerahmen 3 angelenkt. Der gegenüberliegende Endpunkt des ersten Scherenhebels 8 ist in einer Längsführung 10, hier dargestellt bei dem parallelen Aufbau auf der zweiten Seite des Montagerahmens 3, verschiebbar an der Abdeckhaube 2 geführt.

Ein zweiter Scherenhebel 11 ist an der Abdeckhaube 2 in einem festen Punkt 12 drehbar angelenkt und in einer durch eine Gewindestange 13 gebildeten Längsführung 14 verschiebbar an dem Montagerahmen 3 geführt. Dabei ist der Scherenhebel 11 an einem Mutternelement 16 in einem Drehpunkt 22 verschwenkbar befestigt.

Ein Betätigungsmechanismus 23 besteht aus einer elektrischen Antriebseinheit 15 kann auf beiden Seiten des Montagerahmens 3 die jeweils dort angeordnete Gewindestange 13 in Drehung versetzen, wodurch das Mutternelement 16 verschoben wird und der Befestigungspunkt des zweiten Scherenhebels11 verschoben wird. Der erste Scherenhebel 8 und der zweite Scherenhebel 11 sind in einem Drehpunkt 17 miteinander verbunden. Dabei ist ein kurzer Scherenhebelabschnitt 18 des ersten Scherenhebels 8 auf der gleichen Seite des Drehpunkts 17 angeordnet wie ein kurzer Scherenhebelabschnitt 19 des zweiten Scherenhebels 11 und kürzer als die jeweiligen Scherenhebelabschnitte auf der anderen Seite des Drehpunkts. Dadurch erfolgt bei einer Betätigung nicht nur ein Anheben der Abdeckhaube 2, sondern auch eine Kippbewegung.

Die Fig. 4 zeigt den Dachlüfter der Fig. 3 in einer Sprengbildansicht. Die Abdeckhaube 2 ist oberhalb des Montagerahmens 3 angeordnet, wobei an der Unterseite Lamellen 20 in einem Halterahmen 21 angeordnet sind.

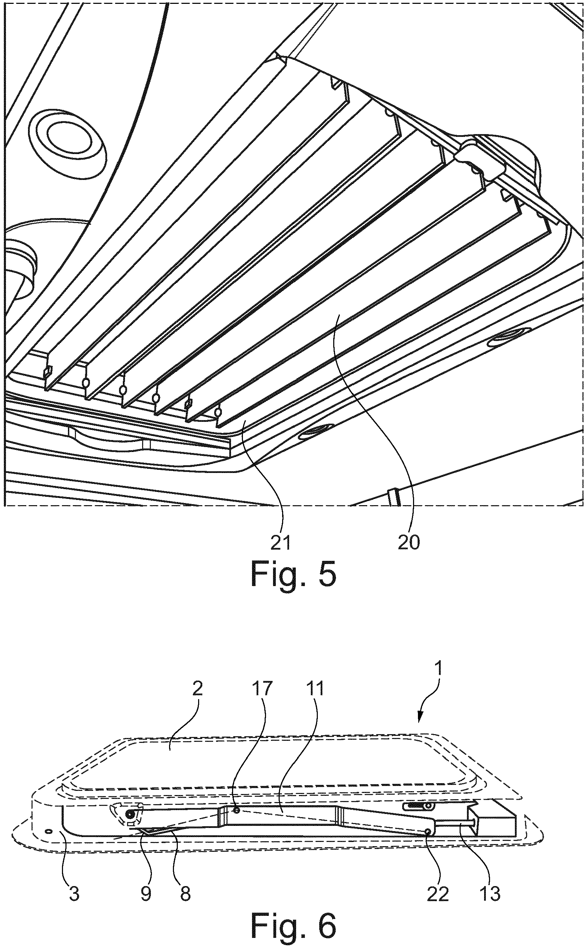

Die Fig. 5 zeigt eine Ansicht von unten auf die Lamellen 20 eines Dachlüfters in dem Halterahmen 21 in der Einbausituation. Durch die Winkelverstellung kann der Tageslichteinfall geregelt werden.

Die Fig. 6 zeigt ein weiteres Ausführungsbeispiel eines Dachlüfters 1 in einer perspektivischen Seitenansicht. Unter der transparenten Abdeckhaube 2 auf dem Montagerahmen 3 sind der erste Scherenhebel 8 und der zweite Scherenhebel 11 angeordnet. Zwischen dem ersten festen Punkt 9, dem Drehpunkt 17 und dem Drehpunkt 22 an der Längsführung 14 besteht ein stumpfer Winkel. Dadurch kann auch in der abgesenkten, geschlossenen Position der Abdeckhaube 2 durch die Gewindestange 13 bei einer Längsverschiebung des Drehpunkts 22 eine nach oben wirkende öffnende oder nach unten in der geschlossenen Stellung festhaltende Kraft ausgeübt werden.

## Patentansprüche

1. Dachlüfter für ein Freizeitfahrzeug bei der in einer Montageeinheit ein Montagerahmen (3) zum Einsetzen in einen Dachausschnitt vorgesehen ist und eine Abdeckhaube (2), die von einer geschlossenen Position auf dem Montagerahmen (3)in eine geöffnete Position angehoben werden kann durch zwei Scherenhebel (8,11), die den Montagerahmen (3) und die Abdeckhaube (2) verbinden, wobei die Scherenhebel (8,11) in einem Drehpunkt (17) verbunden sind und ein Endpunkt der Scherenhebel (11) in der Abdeckhaube an einem festen Punkt (12) drehbar angelenkt ist sowie ein Endpunkt der Scherenhebel (8) in dem Montagerahmen (3) an einem festen Punkt (9) drehbar angelegt ist, die jeweils verbleibenden Endpunkte in Längsführungen (12,14) verschiebbar in der Abdeckhaube (2) und dem Montagerahmen (3) geführt sind und durch einen Betätigungsmechanismus (23) der in der Längsführung (14) des Montagerahmens (3) geführte Scherenhebel (11) zum Anheben der Abdeckhaube verschoben werden kann,
**dadurch gekennzeichnet,**
**dass** die Länge eines Scherenhebelabschnitts (18,19) beider Scherenhebel (8,11) auf der gleichen Seite von dem Drehpunkt (17) kürzer ist als die Länge der Scherenhebelabschnitte auf der anderen Seite des Drehpunkts (17), sodass bei einem Anheben der Abdeckhaube (2) diese zugleich um einen Winkel gekippt wird.

2. Dachlüfter nach Anspruch 1,
**dadurch gekennzeichnet,**
**dass** die beiden Endpunkte (9,22) eines oder beider Scherenhebel (8,11) mit dem Drehpunkt (17) jeweils einen stumpfen Winkel kleiner als 180° bilden, insbesondere der Drehpunkt (17) in der geschlossenen Stellung der Abdeckhaube (2) auf dem Montagerahmen (3) nach oben versetzt ist.

3. Dachlüfter nach Anspruch 1 oder 2,
**dadurch gekennzeichnet,**
**dass** jeweils an einer Seite des Montagerahmens (3) zwei Scherenhebel (8,11) angeordnet sind und die kurzen Enden der Scherenhebel(8,11) in Fahrtrichtung zeigen, sodass die Abdeckhaube (2) in Fahrtrichtung nach unten kippt beim Anheben.

4. Dachlüfter nach einem der vorhergehenden Ansprüche,
**dadurch gekennzeichnet,**
**dass** jeder Scherenhebel (8,11) an einem Ende verschiebbar und am anderen Ende in einem festen Punkt (9,12) drehbar gelagert ist.

5. Dachlüfter nach einem der vorhergehenden Ansprüche,
**dadurch gekennzeichnet,**
**dass** jeder Scherenhebel (8,11) am Ende seines kurzen Scherenhebelabschnitts (18,19) drehbar in einem festen Punkt (9,12) gelagert ist.

6. Dachlüfter nach einem der vorhergehenden Ansprüche,
**dadurch gekennzeichnet,**
**dass** der Betätigungsmechanismus (23) aus einer drehbaren Gewindestange (13) und einen mit dem Ende des Scherenhebels (11) drehbar verbundenen Innengewindeabschnitt (16) besteht.

7. Dachlüfter nach einem der vorhergehenden Ansprüche,
**dadurch gekennzeichnet,**
**dass** der Betätigungsmechanismus (23) elektrisch angetrieben werden kann, insbesondere eine Gewindestange (13) nach Anspruch 6 durch einen Elektromotor antreibt.

8. Dachlüfter nach Anspruch 7,
**dadurch gekennzeichnet,**
**dass** die Abdeckhaube (2) einen über eine Lüftungsöffnung (4) des Montagerahmens (3) überstehenden und den Montagerahmen (3) zumindest teilweise überdeckenden Rand, insbesondere nach unten abknickenden Rand, aufweist und ein Elektroantrieb (15) des Betätigungsmechanismus (23) unterhalb dieses Randes auf dem Montagerahmen (3) angeordnet ist.

9. Dachlüfter nach Anspruch 8,
**dadurch gekennzeichnet,**
**dass** der Elektroantrieb (15) an einer Querseite des Montagerahmens angeordnet ist und an beiden Längsseiten an der Ecke des Montagerahmen (3) einen Antrieb für die jeweilige Gewindestange (13) aufweist.

10. Dachlüfter nach einem der vorhergehenden Ansprüche,
**dadurch gekennzeichnet,**
**dass** in dem Montagerahmen (3) unterhalb der Abdeckhaube (2) Lamellen (20) zur Beschattung angeordnet und drehbar gelagert sind, insbesondere in einer Längsrichtung des Dachlüfters.
